# FASCICULE DE BREVET EUROPEEN

(11) **EP 3 844 469 B1**
(45) Date de publication et mention de la délivrance du brevet: **05.10.2022**
(21) Numéro de dépôt: 19758735.5
(22) Date de dépôt: 27.08.2019
(51) Int. Cl.: G01L 17/00, G01L 19/04, G01L 19/06, G01L 19/14, B60C 23/04

(54) **CAPTEUR DE PRESSION SOUS BOITIER**
GEKAPSELTER DRUCKSENSOR
ENCASED PRESSURE SENSOR

(30) Priorité: 31.08.2018 FR 1857877
(43) Date de publication de la demande: 07.07.2021
(73) Titulaire: Safran Electronics & Defense, 75015 Paris (FR); COMPAGNIE GENERALE DES ETABLISSEMENTS MICHELIN, 63000 Clermont-Ferrand (FR); Safran Landing Systems, 78140 Vélizy-Villacoublay (FR); SAFRAN, 75015 Paris (FR)
(72) Inventeur: RIOU, Jean-Christophe, 77550 Moissy-Cramayel (FR); BAILLY, Eric, 77550 Moissy-Cramayel (FR)
(74) Mandataire: Lavialle, Bruno François Stéphane
(86) Numéro de dépôt international: PCT/EP2019/072890
(87) Numéro de publication internationale: WO 2020/043744

(56) Documents cités:
- WO-A1-2016/204389
- CN-A- 107 543 649
- US-A1- 2013 055 821
- US-A1- 2017 158 001

## Description

### DOMAINE DE L'INVENTION

La présente invention concerne la mesure de pression et plus particulièrement la mesure de pression dans une roue d'aéronef.

### ARRIERE PLAN DE L'INVENTION

Classiquement, une roue d'aéronef comprend une jante cylindrique portant un pneumatique définissant avec la jante un volume intérieur rempli d'un fluide sous pression, généralement de l'air ou un fluide comportant une majorité d'azote ainsi que divers constituants de l'air. La mesure de la pression de l'air enfermé dans la roue est effectuée après chaque atterrissage à l'aide d'un dispositif de mesure de pression monté sur une valve de gonflage solidaire de la jante. La jante renferme généralement une pile de disques de freinage appelée puit de chaleur et qui dégage une importante quantité de chaleur lors du freinage de l'aéronef (températures supérieures à 500 degrés Celsius). Cette chaleur oblige à utiliser des matériaux et des techniques d'assemblage spécifiques qui rendent la fabrication d'un tel capteur de pression très couteux. De plus l'exposition du capteur à une température élevée lors de la mesure perturbe la précision de la mesure.

Différents capteurs de pression sont connus de WO 2016/204389 et CN 107543649.

### OBJET DE L'INVENTION

L'invention a pour objet d'améliorer la précision d'un dispositif de mesure de pression.

### RESUME DE L'INVENTION

A cet effet, on prévoit un dispositif de mesure de pression selon la revendication 1.

On obtient alors un dispositif de mesure de pression qui réalise un double filtrage des particules contenues dans le fluide dont la pression est mesurée ainsi qu'un découplage mécanique efficace. La succession des canaux au travers desquels le fluide transite pour atteindre le capteur de pression limite également l'effet des transitoires de pression et de température. Le boitier améliore également la protection contre les agressions mécaniques. Il est donc possible de sélectionner un capteur de pression plus précis que ceux de l'art antérieur dont la sélection était essentiellement basée sur des contraintes relatives à la bonne tenue aux agressions du milieu dans lequel est placé le dispositif.

Une bonne protection du deuxième canal est obtenue car il est métallisé. La protection du capteur contre le gel est améliorée car un élément conducteur est placé à proximité du deuxième canal et est relié à un premier pôle d'un générateur de tension, le deuxième canal étant relié à un deuxième pôle dudit générateur de tension. La protection contre le gel est encore améliorée lorsque le dispositif de mesure de pression comprend un dispositif d'échauffement du au moins un deuxième canal. Une réalisation économique d'un tel dispositif est faisable lorsque le dispositif d'échauffement comprend un fil résistif.

Avantageusement, le capteur de pression s'étend dans le premier volume étanche.

Le filtrage du fluide dont la pression est mesurée est amélioré lorsque le capteur de pression définit une enceinte étanche de mesure et que ladite enceinte étanche de mesure est en communication fluidique avec le deuxième volume.

Avantageusement encore, le dispositif de mesure comprend des moyens de traitement du signal du capteur et/ou des moyens de communication s'étendant dans le premier volume étanche. Il est à noter que dans ce capteur, l'ensemble de l'électronique, l'élément sensible ainsi que le support accueillant les composants électroniques sont sous pression tout en étant protégés par une fine couche de Parylène d'une épaisseur de 10 microns.

Selon un mode de réalisation préféré, une portion de la carte électronique s'étend hors du boitier.

Le filtrage des transitoires de températures, de pression ainsi que des particules présentes dans le fluide dont la pression est mesurée est particulièrement efficace lorsque le premier canal a une section circulaire dont le premier diamètre est compris entre 0.2 et 1.5 millimètres, préférentiellement 1 millimètre et le deuxième canal a une section circulaire dont le deuxième diamètre est compris entre 100 et 300 micromètres, préférentiellement 200 micromètres.

La réalisation de l'élément conducteur est économique lorsque l'élément conducteur comprend une zone de la première face pourvue d'un revêtement conducteur.

La robustesse du dispositif est améliorée lorsque la liaison entre le boitier et la carte électronique comprend des moyens pour amortir les vibrations. La réalisation d'une telle liaison est économique lorsqu'elle est réalisée par collage.

L'invention concerne également un pneumatique comprenant un dispositif de mesure de pression du type ci-dessus, une roue pourvue d'un tel pneumatique ainsi qu'un aéronef équipé d'une telle roue.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux figures annexées parmi lesquelles :
- la figure 1 est une vue schématique éclatée en perspective d'un dispositif de mesure de pression selon un premier mode de réalisation de l'invention ;
- la figure 2 est une vue schématique en coupe du dispositif de mesure de pression de la figure 1 ;
- la figure 3 est une vue de détail du dispositif de mesure de pression de la figure 1 ;
- la figure 4 est une vue schématique partielle en coupe d'une roue selon un premier mode de réalisation de l'invention ;
- la figure 5 est une vue schématique en coupe d'un dispositif de mesure de pression selon un deuxième mode de réalisation de l'invention ;
- la figure 6 est une vue schématique de dessus du dispositif de mesure de pression de la figure 5 ;
- la figure 7 est une vue de détail d'un troisième mode de réalisation du dispositif de mesure de pression selon l'invention.

### DESCRIPTION DETAILLEE DE L'INVENTION

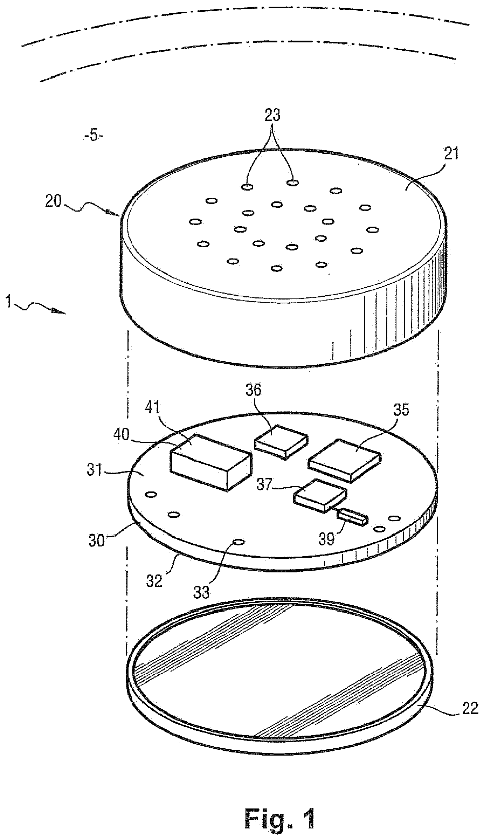

En référence aux figures 1 à 3, le dispositif de mesure de pression selon l'invention, généralement désigné 1, comprend un boitier 20 en résine phénolique, ici en forme de cylindre droit, s'étendant autour d'une carte électronique 30 pourvue d'un capteur de pression 40 soudé sur la première face 31 de la carte électronique 30. Le boitier 20 comprend un couvercle supérieur 21 vissé sur un couvercle inférieur 22. Le couvercle supérieur 21 et le couvercle inférieur 22 sont agencés pour réaliser un lamage 23 périphérique dans lequel la carte électronique 30 est fixée à l'aide d'un cordon 2 de colle souple à base de silicone.

Le couvercle supérieur 21 du boitier 20 délimite avec la première face 31 de la carte électronique 30 un premier volume 3 étanche. Le couvercle inférieur 22 du boitier 20 délimite avec la deuxième face 32 de la carte électronique 30 opposée à la première face 31 un deuxième volume 4 étanche. Le couvercle supérieur 21 comprend vingt premiers canaux 24 qui mettent en communication fluidique le milieu extérieur 5 au boitier 20 et le premier volume 3. Les premiers canaux 24 ont une section circulaire dont le premier diamètre 24.1 est d'un millimètre. La carte électronique 30 comprend vingt deuxièmes canaux 33 traversant et qui mettent en communication fluidique le premier volume 3 et le deuxième volume 4. Les deuxièmes canaux 33 ont une section circulaire dont le deuxième diamètre 33.1 est de 200 micromètres.

Le capteur de pression 40 s'étend dans le premier volume 3 et comprend un capotage 41 de protection mécanique (wirebondings) qui définit une enceinte 42 étanche de mesure. Ici, le capteur de pression 40 est un capteur capacitif comprenant une membrane 43 s'étendant parallèlement à la première face 31 et qui est munie d'une première électrode 44. La partie supérieure du capotage 41 constitue une deuxième électrode 45 d'un condensateur 46. Un troisième canal 34 met en communication fluidique l'enceinte 42 avec le deuxième volume 4. Le troisième canal 34 a une section circulaire dont le deuxième diamètre 34.1 est de 200 micromètres

Le dispositif 1 comprend un microcontrôleur 35 auquel sont reliés la première électrode 44 et la deuxième électrode 46 ainsi qu'un émetteur/récepteur radio 36. Le microcontrôleur 35 et l'émetteur/récepteur radio 36 s'étendent dans le premier volume 3. Le premier volume 3 renferme également un récupérateur 37 d'énergie cinétique solidaire de la carte électronique 30. Le récupérateur 37 comprend un convertisseur 38 qui convertit l'énergie cinétique captée en énergie électrique et l'envoie à une première batterie 39. Le récupérateur d'énergie 37 comprend, ici, une bille 37.1 en matériau ferromagnétique pouvant se déplacer librement dans l'entrefer d'une bobine 37.2. La première batterie 39 alimente le microcontrôleur 35 et l'émetteur/récepteur radio 36.

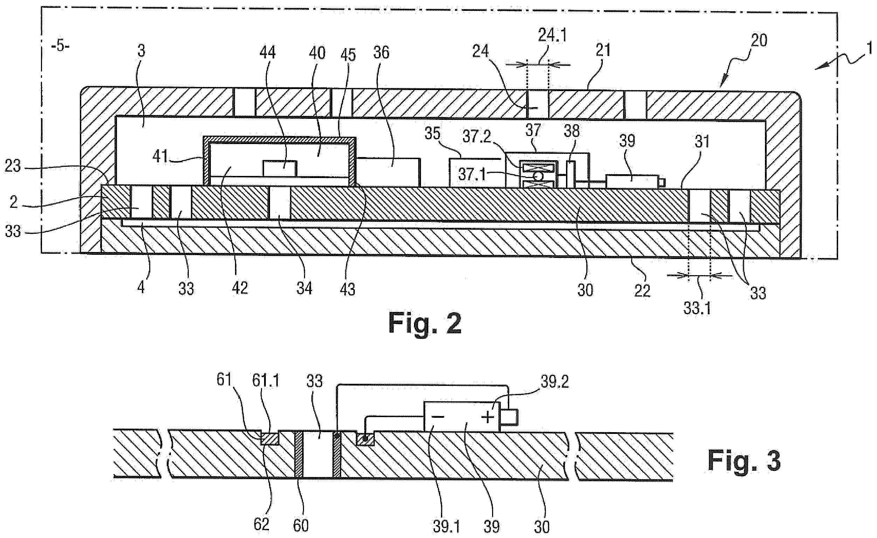

Comme visible en figure 3, les deuxièmes canaux 33 sont pourvus d'un revêtement 60 métallique obtenu par métallisation. Un anneau 61 s'étend autour de chaque deuxième canal 33 à une distance non nulle de celui-ci. Chaque anneau 61 est, ici, réalisé par un dépôt de cuivre dans une rainure 62 usinée dans la carte électronique 30 et est relié à un premier pôle 39.1 de la première batterie 39, ici un pôle négatif. Chaque revêtement 60 de chaque deuxième canal 33 est relié à un deuxième pôle 39.2 de la première batterie 39, ici un pôle positif. Avantageusement, la surface supérieure 61.1 de l'anneau 61 s'étend sensiblement en retrait de la première face 31 de la carte électronique 30 afin de créer une zone de rétention.

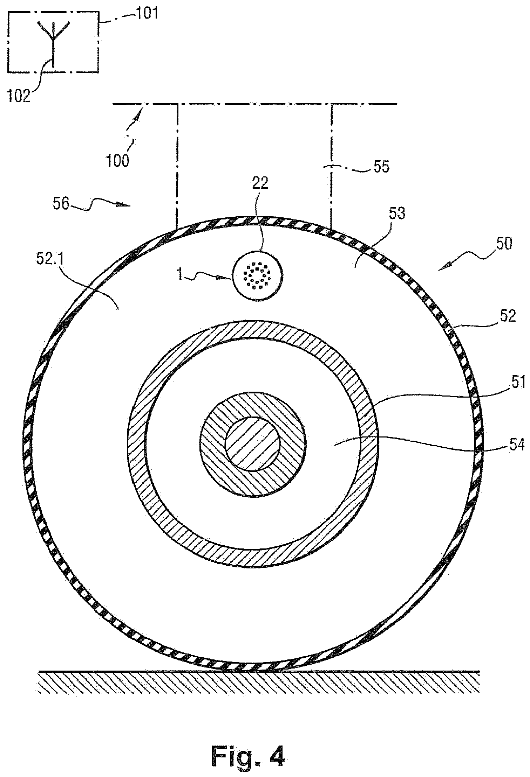

Comme visible en figure 4, le dispositif de mesure de pression 1 est placé à l'intérieur d'une roue 50 d'un aéronef 100. La roue 50 comprend une jante 51 sur laquelle est monté un pneumatique 52. Le pneumatique 52 définit avec la jante 51 un volume intérieur 53 de la roue 50 rempli d'air sous pression. Le couvercle inférieur 22 du dispositif de mesure de pression 1 est collé sur la face intérieure d'un flanc 52.1 du pneumatique 52. Pour des raisons de redondances de la mesure il est envisageable de mettre plusieurs dispositifs de mesure de pression 1 dans une même roue 50.

L'équipement avionique 101 de l'aéronef 100 comprend un émetteur/récepteur radio 102 accordé sur les fréquences d'émission/réception de l'émetteur/récepteur 36 du dispositif de mesure de pression 1.

En fonctionnement, l'air sous pression du volume intérieur 53 pénètre par les premiers canaux 24 dans le premier volume 3. Les premiers canaux 24 réalisent un premier filtrage des particules (poussière, limaille, etc..) pouvant être présentes dans le volume intérieur 53. Un second filtrage de l'air sous pression du volume intérieur 53 est réalisé par les deuxièmes canaux 33 lors du passage de l'air sous pression du volume intérieur 53 dans les deuxièmes canaux 33. L'air présent dans le deuxième volume 4 pénètre ensuite l'enceinte 42 et agit sur la membrane 43. Sous l'effet de la pression de l'air régnant dans l'enceinte 42, la membrane 43 se déforme et la capacité du condensateur 46 est modifiée. Le microcontrôleur 35 convertit la capacité du condensateur 46 en une valeur de pression de la roue 50 qui est ensuite envoyée à l'aide de l'émetteur/récepteur radio 36 à l'émetteur/récepteur radio 102 de l'aéronef 100.

La première batterie 39 établit une tension entre le revêtement métallique 60 du deuxième canal 33 et le l'anneau 61 qui l'entoure, réalisant une vaporisation par électrolyse de l'eau qui pourrait venir obstruer le canal 33. Le diamètre du deuxième canal 33 favorise une rétention de l'eau par capillarité et contribue à empêcher le passage de l'humidité de l'air contenu dans le volume intérieur 53 vers le deuxième volume 4. La rétention de l'humidité dans le deuxième canal 33 et le dispositif d'électrolyse permettent de limiter la présence d'eau sur la membrane 43 et de protéger le dispositif 1 des conséquences préjudiciables du gel lorsque l'aéronef 100 est en vol. En effet, le gel de l'eau sur l'élément sensible d'un capteur de pression le rend généralement inopérant et provoque le plus souvent sa destruction.

Au cours des phases de rotation de la roue 50, le récupérateur 37 convertit l'énergie cinétique à laquelle est soumis le dispositif 1 de mesure de pression en énergie électrique qui est stockée dans la première batterie 39.

La souplesse du cordon 2 de colle qui lie le boitier 20 et la carte électronique 30 autorise un mouvement relatif du boitier 20 et de la carte électronique 30 ce qui permet de limiter la transmission des vibrations et chocs de la roue 50 à la carte électronique 30. Les inventeurs ont constaté une réduction d'au moins un facteur 100 du niveau des vibrations, chocs et contraintes mécaniques auxquelles la carte électronique 30 est soumise par rapport à un collage direct de la carte électronique 30 sur le flanc 52.1 de la roue 50. La colle souple admet généralement une dureté comprise entre 30 shore 00 et 60 shore A.

On obtient alors un dispositif 1 de mesure de pression qui réalise un double filtrage de particules de l'air dont la pression est mesurée ainsi qu'un découplage mécanique efficace. La succession des canaux au travers desquels l'air transite pour atteindre le capteur 40 limite également l'effet des transitoires de pression et de température. Enfin, le dispositif 1 de mesure de pression possède une résistance améliorée au gel.

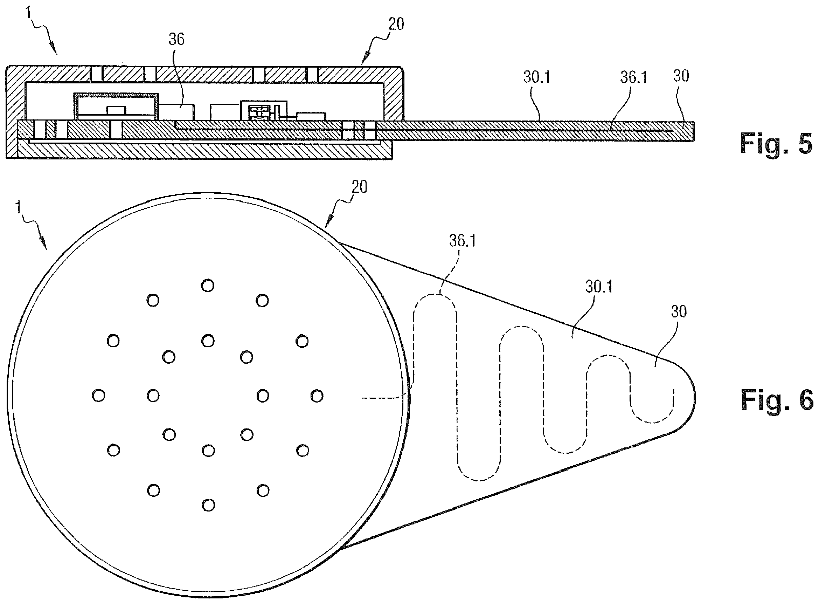

Un second mode de réalisation de l'invention est représenté aux figures 5 et 6. Selon ce mode de réalisation, la carte électronique 30 possède une portion 30.1, ici de forme sensiblement triangulaire, qui s'étend hors du boitier 20 et à l'intérieur de laquelle s'étend un fil 36.1 d'antenne relié à l'émetteur/récepteur radio 36.

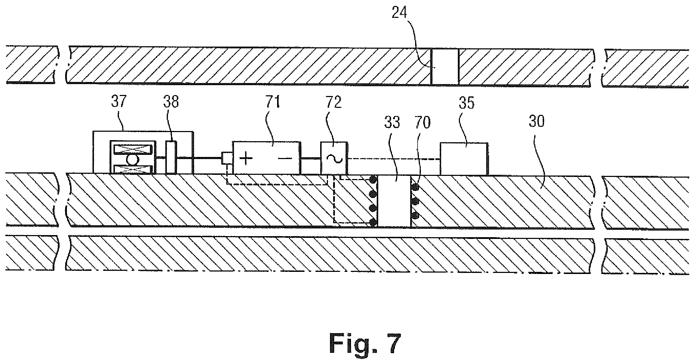

Selon un troisième mode de réalisation représenté en figure 7, les deuxièmes canaux 33 comprennent un dispositif de réchauffement, ici sous la forme d'un fil 70 résistif noyé dans la carte 30, et s'étendant en spirale autour de chaque deuxième canal 33. Le fil 70 est relié aux pôles d'une deuxième batterie 71 par l'intermédiaire d'une unité 72 de régulation de courant pilotée par le microcontrôleur 35. Avantageusement, la deuxième batterie 71 est reliée au convertisseur 38. Ainsi le fil résistif 70 permet de réchauffer le fluide passant au travers des deuxièmes canaux 33 depuis le premier volume 3 vers le deuxième volume 4 et de maintenir sa température au-dessus du point de rosée. Ce réchauffement permet ainsi de s'assurer que le fluide pénétrant l'enceinte 42 est sec tout en focalisant les éventuelles zones de formation du gel dans le premier volume 3 en périphérie des premiers canaux 33 là où le fluide n'est pas réchauffé.

Bien entendu, l'invention n'est pas limitée aux modes de réalisation décrits mais englobe toute variante entrant dans le champ de l'invention tel que défini par les revendications.

En particulier,
- bien qu'ici le dispositif de mesure de pression comprenne un boitier en résine phénolique, l'invention s'applique également à d'autres types de boitiers comme par exemple un boitier métallique, en fibre de carbone, en matière thermoplastique, en fibre composite, en résine époxy ou autre ;
- bien qu'ici le boitier soit de forme cylindrique, l'invention s'applique à d'autres formes de boitiers comme par exemple un boitier ovoïde, parallélépipédique, ou de forme quelconque ;
- bien qu'ici le boitier comprenne un couvercle supérieur vissé sur un couvercle inférieur, l'invention s'applique également à d'autres méthodes d'assemblage des éléments du boitier, comme par exemple un soudage ultrasonique, un collage, un brasage ou un rivetage. Le boitier peut également être composé d'un nombre différent d'éléments comme par exemple un unique élément ou plus de deux ;
- bien qu'ici le boitier comprenne un couvercle supérieur et un couvercle inférieur assemblés l'un à l'autre, l'invention s'applique également à un boitier comprenant deux portions ou plus reliées directement à la carte électronique ;
- bien qu'ici l'antenne soit une partie de la carte électronique sur laquelle le capteur est directement reporté, l'antenne peut être réalisée sur les faces des deux capots et reliés en interne à la carte électronique par le biais d'un fil, d'une tresse ou d'un collage conducteur électrique ;
- bien qu'ici l'antenne soit une partie de la carte électronique, l'antenne peut être constituée d'un ou plusieurs fils métalliques droits ou enroulés en ressort ou spirale ;
- bien qu'ici la carte électronique soit fixée au boitier à l'aide d'un cordon de colle souple à base de silicone, l'invention s'applique également à d'autres types de liaison entre le boitier et la carte électronique autorisant un mouvement relatif du boitier et de la carte électronique, comme par exemple un joint synthétique ou naturel de type caoutchouc ou EPDM rapporté par vissage. Certains de ces matériaux permettent également d'amortir les vibrations auxquelles est soumis le dispositif comme par exemple un collage à l'aide de colle néoprène ;
- bien qu'ici le couvercle supérieur comprenne vingt premiers canaux, l'invention s'applique également à un nombre différent de premier canaux comme par exemple un unique canal, deux à dix-neuf canaux, ou plus de vingt ;
- bien qu'ici les premiers canaux aient une section circulaire dont le premier diamètre est égal à un millimètre, l'invention s'applique également à des premiers canaux de section différente comme par exemple une section carré ou quelconque, ainsi qu'à un premier diamètre compris entre 0.2 et 1.5 millimètre ou pouvant être supérieur ou inférieur à un millimètre ;
- bien qu'ici la carte électronique comprenne vingt deuxième canaux, l'invention s'applique également à un nombre différent de deuxième canaux comme par exemple un unique canal, deux à dix-neuf canaux, ou plus de vingt ;
- bien qu'ici les deuxièmes canaux aient une section circulaire dont le deuxième diamètre est égal à 200 micromètres, l'invention s'applique également à des deuxièmes canaux de section différente comme par exemple une section carré ou quelconque, ainsi qu'à un deuxième diamètre compris entre 100 et 300 micromètres ou pouvant être supérieur ou inférieur à 200 micromètre ;
- bien qu'ici le dispositif de mesure de pression comprenne un microcontrôleur, l'invention s'applique également à d'autres moyens de traitement du signal comme par exemple un FPGA, des portes logiques ou un microprocesseur ;
- bien qu'ici le microcontrôleur, ainsi que les autres composants, soient soudés sur une carte électronique, l'invention s'applique également à d'autres moyens de liaison des composants au circuit de commande comme par exemple des liaisons par brochage, par frittage ou par brasage sur un support de type PCB, ou des composants reliés de manière filaire ;
- bien qu'ici le dispositif de mesure de pression comprenne une émetteur/récepteur radio, l'invention s'applique également à d'autres types de techniques d'émission sans fil comme par exemple un protocole 2G, 3G, 4G, 5G, de type LoRa, edge, Wi-Fi, Bluetooth, ultrason ou IOT ;
- bien qu'ici le dispositif de mesure de pression comprenne un convertisseur d'énergie cinétique inductif, l'invention s'applique également à d'autres types de convertisseurs d'énergie comme par exemple un convertisseur d'énergie cinétique de type piézoélectrique ou un convertisseur d'énergie thermique ou un dispositif de récupération d'énergie électromagnétique ;
- bien qu'ici le dispositif de mesure soit placé dans une roue d'aéronef, l'invention s'applique également à d'autres types de roues de véhicule comme par exemple des camions ou des automobiles ;
- bien qu'ici le pneumatique soit rempli d'air comprimé, l'invention s'applique également à des pneus remplis d'autres types de fluide sous pression comme par exemple des gaz ou des liquides ;
- bien qu'ici le capteur de pression soit de type capacitif, l'invention s'applique également à d'autres types de capteurs de pression comme par exemple un capteur résistif, inductif, piézorésistif, piézoélectrique ou résonnant;
- bien qu'ici les composants du dispositif soient tous implantés sur la première face de la carte électronique, l'invention s'applique également à une disposition différente des composants, comme par exemple une implantation de tout ou partie des composants du dispositif sur la deuxième face de la carte électronique ;
- bien qu'ici les deuxièmes canaux soient pourvus d'un revêtement métallique obtenu par métallisation, l'invention s'applique également à d'autres moyens d'application d'un revêtement métallique sur les deuxièmes canaux, comme par exemple un sertissage d'une chemise métallique ou la pose d'une peinture conductrice ;
- bien qu'ici un anneau en cuivre reçu dans une rainure de la première surface de la carte électronique s'étende autour de chaque deuxième canal, l'invention s'applique également à d'autre type d'élément conducteur placé à proximité du deuxième canal comme par exemple un anneau de forme carrée ou quelconque, une métallisation de la surface de la première carte électronique ou une impression à l'aide d'une encre conductrice ;
- bien qu'ici le dispositif de mesure de pression comprenne une batterie, l'invention s'applique également à d'autres types de générateur de tension comme par exemple une pile ou un condensateur ;
- bien qu'ici l'élément conducteur soit relié à un pôle négatif du générateur de tension et le revêtement de chaque deuxième canal soit relié au pôle positif du générateur de tension, l'invention s'applique également à une inversion des polarités de connexion ;
- bien qu'ici le capteur soit placé dans un pneumatique, le dispositif de mesure de pression peut également être utilisé pour la mesure de la pression régnant dans d'autres types d'enceintes comme par exemple dans une soufflerie ou dans un conduit de ventilation
- bien qu'ci la carte électronique soit reçue dans un lamage périphérique du boitier, l'invention s'applique également à d'autres types de liaison entre le boitier et la carte électronique comme par exemple un ou plusieurs plots élastomères s'étendant depuis la première surface de la carte électronique jusqu'au couvercle supérieur du boitier et un ou plusieurs plots élastomères s'étendant depuis la deuxième surface de la carte électronique jusqu'au couvercle inférieur du boitier ;
- bien qu'ici la portion de carte s'étendant hors du boitier soit une portion rigide qui porte une antenne, la portion de carte peut également être flexible et/ou contenir d'autres types d'éléments conducteurs en relation avec les composants qui sont sous le boîtier de protection ;
- le dispositif de mesure de pression peut également comprendre un capteur de température pour transmettre la température et/ou réaliser une compensation en température de la mesure du capteur de pression. La mesure de la température peut être réalisée par un capteur dédié ou encore être mesurée sur un capteur piézorésistif par la mesure de la résistance d'entrée de l'élément sensible ou par toute autre combinaison de résistances d'un capteur piézorésistif dont le résultat ne fournirai qu'une image de la température, celle de la pression étant éliminée dans la combinaison réalisée (résistances travaillant en longitudinal ou transversal donnant respectivement des facteurs de jauge positif et négatifs) ;
- bien qu'ici tous les deuxièmes canaux comprennent un fil résistif, l'invention s'applique également à un dispositif de mesure dans lequel seul une partie ou un seul des deuxièmes canaux comprennent un dispositif d'échauffement. Le dispositif d'échauffement peut également équiper le troisième canal ;
- bien qu'ici un fil résistif soit noyé dans la carte électronique, l'invention s'applique également à d'autres types de dispositif d'échauffement comme par exemple une piste résistive imprimé sur le deuxième canal, un chauffage par induction de la métallisation du deuxième canal ;
- bien qu'ici le fil résistif soit alimenté par un deuxième batterie reliée à un unité de régulation de courant, l'invention s'applique également à d'autres sources d'énergie comme par exemple la première batterie, et d'autres types de commande de réglage du dispositif d'échauffement comme par exemple un asservissement du dispositif à l'aide d'un capteur de température.

## Revendications

1. Dispositif (1) de mesure de pression comprenant un boitier (20) s'étendant autour d'une carte électronique (30) pourvue d'un capteur de. pression (40),
- le boitier (20) délimitant avec une première face (31) de la carte électronique (30) un premier volume étanche (3),
- le boitier (20) délimitant également avec une deuxième face (32) de la carte électronique (30) opposée à la première face (31) un deuxième volume étanche (4),
- le boitier (20) comprenant au moins un premier canal (24) mettant en communication fluidique le milieu extérieur (5) au boitier (20) et le premier volume étanche (3),
- la carte électronique (30) comprenant au moins un deuxième canal (33) mettant en communication fluidique le premier volume (3) et le deuxième volume (4),
- la liaison entre le boitier (20) et la carte électronique (30) étant agencée pour autoriser un mouvement relatif du boitier (20) et de la carte électronique (30), **caractérisé en ce que**:
le deuxième canal (33) est métallisé, et un élément conducteur (61) est placé à proximité du deuxième canal (33) et est relié à un premier pôle (39.1) d'un générateur de tension (39), le deuxième canal (33) étant; relié à un deuxième pôle (39.2) dudit générateur de tension (39).

2. Dispositif (1) de mesure de pression selon la revendication 1, dans lequel le capteur de pression (40) s'étend dans le premier volume étanche (3),

3. Dispositif (1) de mesure de pression selon l'une quelconque des revendications précédentes, dans lequel le capteur de pression (40) définit une enceinte étanche (42) de mesure, ladite enceinte étanche (42) de mesure étant en communication fluidique avec le deuxième volume. (4).

4. Dispositif (1) de mesure de pression selon l'une quelconque des revendications précédentes, comprenant des moyens de traitement (35) du signal du capteur (40) et/ou des moyens de communication (36) s'étendant dans le premier volume étanche (3).

5. Dispositif (1) de mesure de pression selon l'une quelconque des revendications précédentes, dans lequel une portion (30.1) de la carte électronique (30) s'étend hors du boitier (20).

6. Dispositif (1) de mesure de pression selon l'une quelconque des revendications précédentes, dans lequel lé premier canal (24) a une section circulaire dont le premier diamètre (24.1} est compris entre 0.2 et 1.5 millimètres, préférentiellement 1 millimètre et le deuxième canal (33) a une section circulaire dont le. deuxième diamètre (33.1) est compris. entre 100 et 300 micromètres, préférentiellenient 200 micromètres.

7. Dispositif (1) de mesure de pression selon la revendication 1, dans lequel l'élément conducteur (61) comprend une zone de la première face (31) de la carte électronique (30) pourvue d'un revêtement conducteur.

8. Dispositif (1) de mesure de pression selon l'une quelconque des revendications, précédentes, dans lequel la liaison entre le boitier (20) et la carte électronique (30) comprend des moyens pour amortir les vibrations.

9. Dispositif (1) de mesure de pression selon l'une quelconque des revendications précédentes, dans lequel la liaison entre le boitier (20) et la carte électronique (30) est une liaison collée.

10. Dispositif (1) de mesure de pression selon l'une quelconque des revendications précédentes, comprenant un dispositif d'échauffement du au moins un deuxième canal (33) .

11. Dispositif (1) de mesure de pression selon la revendication 10, dans lequel le dispositif d'échauffement comprend un fil résistif (70).

12. Pneumatique (52) comprenant un dispositif (1) de mesure de pression selon l'une quelconque des revendications précédentes.

13. Roue (50) comprenant un pneumatique (52) selon la revendication 12.

14. Aéronef (100) comprenant une roue (50) selon la revendication 13.

## Patentansprüche

1. Druckmessvorrichtung, umfassend ein Gehäuse (20), das sich um eine Leiterplatte (30) erstreckt, die mit einem Drucksensor (40) versehen ist,
- wobei das Gehäuse (20) mit einer ersten Fläche (31) der Leiterplatte (30) ein erstes dichtes Volumen (3) begrenzt,
- wobei das Gehäuse (20) ferner mit einer der ersten Fläche (31) abgewandten zweiten Fläche (32) der Leiterplatte (30) ein zweites dichtes Volumen (4) begrenzt,
- wobei das Gehäuse (20) mindestens einen ersten Kanal (24) umfasst, der die Umgebung (5) außerhalb des Gehäuses (20) und das erste dichte Volumen (3) in Fluidverbindung bringt,
- wobei die Leiterplatte (30) mindestens einen zweiten Kanal (33) umfasst, der das erste Volumen (3) und das zweite Volumen (4) in Fluidverbindung bringt,
- wobei die Verbindung zwischen dem Gehäuse (20) und der Leiterplatte (30) so ausgebildet ist, dass sie eine relative Bewegung des Gehäuses (20) und der Leiterplatte (30) gestattet,
**dadurch gekennzeichnet, dass**:
der zweite Kanal (33) metallisiert ist und ein leitendes Element (61) in der Nähe des zweiten Kanals (33) platziert und mit einem ersten Pol (39.1) eines Spannungsgenerators (39) verbunden ist, wobei der zweite Kanal (33) mit einem zweiten Pol (39.2) des genannten Spannungsgenerators (39) verbunden ist.

2. Druckmessvorrichtung (1) nach Anspruch 1, bei der sich der Drucksensor (40) in dem ersten dichten Volumen (3) erstreckt.

3. Druckmessvorrichtung (1) nach einem der vorhergehenden Ansprüche, bei der der Drucksensor (40) eine dichte Messkammer (42) definiert, wobei die genannte dichte Messkammer (42) in Fluidverbindung mit dem zweiten Volumen (4) steht.

4. Druckmessvorrichtung (1) nach einem der vorhergehenden Ansprüche, umfassend Verarbeitungsmittel (35) zur Verarbeitung des Signals des Sensors (40) und/oder Kommunikationsmittel (36), die sich in dem ersten dichten Volumen (3) erstecken.

5. Druckmessvorrichtung (1) nach einem der vorhergehenden Ansprüche, bei der sich ein Abschnitt (30.1) der Leiterplatte (30) außerhalb des Gehäuses (20) erstreckt.

6. Druckmessvorrichtung (1) nach einem der vorhergehenden Ansprüche, bei der der erste Kanal (24) einen kreisförmigen Querschnitt hat, dessen erster Durchmesser (24.1) zwischen 0,2 und 1,5 Millimeter, vorzugsweise 1 Millimeter beträgt, und der zweite Kanal (33) einen kreisförmigen Querschnitt hat, dessen zweiter Durchmesser (33.1) zwischen 100 und 300 Mikrometer, vorzugweise 200 Mikrometer beträgt.

7. Druckmessvorrichtung (1) nach Anspruch 1, bei der das leitende Element (61) eine Zone der ersten Fläche (31) der Leiterplatte (30) umfasst, die mit einem leitenden Überzug versehen ist.

8. Druckmessvorrichtung (1) nach einem der vorhergehenden Ansprüche, bei der die Verbindung zwischen dem Gehäuse (20) und der Leiterplatte (30) Mittel zum Dämpfen der Vibrationen umfasst.

9. Druckmessvorrichtung (1) nach einem der vorhergehenden Ansprüche, bei der die Verbindung zwischen dem Gehäuse (20) und der Leiterplatte (30) eine Klebeverbindung ist.

10. Druckmessvorrichtung (1) nach einem der vorhergehenden Ansprüche, umfassend eine Heizvorrichtung zum Erwärmen des mindestens einen zweiten Kanals (33).

11. Druckmessvorrichtung (1) nach Anspruch 10, bei der die Heizvorrichtung einen Widerstandsdraht (70) umfasst.

12. Reifen (52), umfassend eine Druckmessvorrichtung (1) nach einem der vorhergehenden Ansprüche.

13. Rad (50), umfassend einen Reifen (52) nach Anspruch 12.

14. Luftfahrzeug (100), umfassend ein Rad (50) nach Anspruch 11.

## Claims

1. A pressure measurement device (1) comprising a housing (20) extending around an electronic card (30) provided with a pressure sensor (40);
• the housing (20) co-operating with a first face (31) of the electronic card (30) to define a first sealed volume (3);
• the housing (20) also co-operating with a second face (32) of the electronic card (30) that is opposite from the first face (31) to define a second sealed volume (4) ;
• the housing (20) including at least one first channel (24) putting the medium (5) outside the housing (20) into fluid flow communication with the first sealed volume (3);
• the electronic card (30) including at least one second channel (33) putting the first volume (3) into fluid flow communication with the second volume (4); and
• the connection between the housing (20) and the electronic card (30) being arranged to allow relative movement between the housing (20) and the electronic card (30) **characterized in that** the second channel is metal-plated and a conductive element (61) is placed in the proximity of the second channel (33) and is connected to a first pole (39.1) of a voltage generator (39), the second channel (33) being connected to a second pole (39.2) of said voltage generator (39).

2. A pressure measurement device (1) according to claim 1, wherein the pressure sensor (40) extends in the first sealed volume (3).

3. A pressure measurement device (1) according to either preceding claim, wherein the pressure sensor (40) defines a sealed measurement enclosure (42), said sealed measurement enclosure (42) being in fluid flow communication with the second volume (4).

4. A pressure measurement device (1) according to any preceding claim, including processor means (35) for processing the signal from the sensor (40) and/or communication means (36) extending in the first sealed volume (3).

5. A pressure measurement device (1) according to any preceding claim, wherein a portion (30.1) of the electronic card (30) extends outside the housing (20).

6. A pressure measurement device (1) according to any preceding claim, wherein the first channel (24) is circular in section with a first diameter (24.1) lying in the range 0.2 mm to 1.5 mm, preferably being 1 mm, and the second channel (33) is circular in section with a second diameter (33.1) lying in the range 100 µm to 300 µm, preferably being 200 µm.

7. A pressure measurement device (1) according to claim 1, wherein the conductive element (61) comprises a zone of the first face (31) of the electronic card (30) that is provided with a conductive coating.

8. A pressure measurement device (1) according to any preceding claim, wherein the connection between the housing (20) and the electronic card (30) includes means for damping vibration.

9. A pressure measurement device (1) according to any preceding claim, wherein the connection between the housing (20) and the electronic card (30) is an adhesive connection.

10. A pressure measurement device (1) according to any preceding claim, including a heater device for heating the at least one second channel (33).

11. A pressure measurement device (1) according to claim 10, wherein the heater device comprises a resistive wire (70) .

12. A tire (52) including a pressure measurement device (1) according to any preceding claim.

13. A wheel (50) including a tire (52) according to claim 12.

14. An aircraft (100) including a wheel (50) according to claim 13.
